# EUROPÄISCHE PATENTSCHRIFT

(11) **EP 2 711 166 B1**
(45) Veröffentlichungstag und Bekanntmachung des Hinweises auf die Patenterteilung: **27.07.2016**
(21) Anmeldenummer: 12185672.8
(22) Anmeldetag: 24.09.2012
(51) Int. Cl.: B31B 1/08, B65G 47/53, B65G 47/88, B31B 19/02, B31B 19/16, B26D 1/04, B26D 5/08, B26D 5/20, B26D 7/01, B65H 29/16

(54) **Verfahren und Vorrichtung zum Transport von flachen Werkstücken**
Method and device for transporting flat workpieces
Procédé et dispositif destinés au transport de pièces à usiner plates

(43) Veröffentlichungstag der Anmeldung: 26.03.2014
(73) Patentinhaber: Starlinger & Co. Gesellschaft m.b.H., 1060 Wien (AT)
(72) Erfinder: Grabenweger, David, 2564 Furth (AT)
(74) Vertreter: Schwarz & Partner

(56) Entgegenhaltungen:
- WO-A1-2009/121542
- DE-A1-102009 000 893
- JP-A- 7 252 000

## Beschreibung

Die Erfindung betrifft ein Verfahren und eine Vorrichtung zum Transport von flachen Werkstücken mit einer Werkstücklänge und einer Werkstückbreite, insbesondere von schlauchförmigen Sackkörpern, mit einer Längstransportvorrichtung, auf der die Werkstücke in ihrer Längsrichtung hintereinander angeordnet einzeln oder zusammenhängend in einer Längstransportrichtung zu einem Arbeitsbereich transportiert werden, der gegebenenfalls mit einer Schneideeinrichtung zum Vereinzeln eines führenden Werkstücks von zusammenhängenden Werkstücken versehen ist, mit einer Quertransportvorrichtung, auf der die Werkstücke in ihrer Breitenrichtung hintereinander angeordnet in einer orthogonal zur Längstransportrichtung ausgerichteten Quertransportrichtung von dem Arbeitsbereich weggefördert werden, und mit zumindest einem im Arbeitsbereich angeordneten, sich in der Quertransportrichtung über zumindest einen Teil der Werkstückbreite, vorzugsweise über die gesamte Werkstückbreite erstreckenden Werkstückhalter, der zwischen einer Haltestellung und einer offenen Stellung verstellbar ist, um ein im Arbeitsbereich befindliches Werkstück temporär festzuhalten.

In industriellen Produktionsprozessen zur Verarbeitung von flachen Werkstücken, wie z.B. bei der Herstellung von Säcken aus schlauchförmigen Sackkörpern, steht man vor dem Problem, dass ein flaches Werkstück taktweise in einen Arbeitsbereich hineinzufördern ist, um in dem Arbeitsbereich einen Bearbeitungsvorgang an dem Werkstück vorzunehmen und das Werkstück anschließend in einer von der Einförderungsrichtung orthogonal versetzten Wegförderungsrichtung zur weiteren Bearbeitung wegzufördern.

Beispielsweise ist aus dem Dokument JP 7 252000 A eine Vorrichtung zum Umschalten der Förderrichtung von flachen Medien bekannt, wobei eine Abgabewalze zum Absenken auf das Medium und zum Anpressen des Mediums gegen ein Abgabeförderband vorgesehen ist.

Das Dokument DE 10 2009 000 893 A1 beschreibt ein Verfahren und eine Vorrichtung zur Änderung der Transportrichtung aufeinanderfolgender flacher Werkstücke, wobei ein folgendes flaches Werkstück zumindest um eine bestimmte Strecke vorgeschoben wird, während das vorauslaufende Werkstück um eine Strecke, die kleiner ist als die Werkstückbreite, in eine zweite Transportrichtung weiter transportiert wird.

Aus der WO 2009/121542 A1 ist eine Vorrichtung zur Herstellung von Säcken bekannt, die eine Vereinzelungsvorrichtung zum Abtrennen von Stücken von einem schlauchförmigen Material und Übergabemittel zum Übergeben der abgetrennten Stücke an eine kontinuierlich laufende Quertransportvorrichtung aufweist. Die Übergabemittel umfassen einen Mitnehmer, mit welchem jeweils ein abgetrenntes Stück ergreifbar ist, wobei der zumindest eine Mitnehmer im Moment des einen Schlauchstücks anhaltbar ist.

Um den Bearbeitungsvorgang qualitativ hochwertig durchführen zu können, ist es erforderlich, zumindest einen Werkstückhalter im Arbeitsbereich vorzusehen, der das Werkstück während des Bearbeitungsvorgangs festhält und anschließend für die Wegförderung freigibt. Diese durch den Werkstückhalter verursachte Verringerung des Durchsatzes an Werkstücken durch den Arbeitsbereich wird noch dadurch verschlimmert, dass bei den bisherigen Werkstückhaltern ein Werkstück den Arbeitsbereich vollständig verlassen haben muss bevor der Werkstückhalter ein nachfolgendes Werkstück festhalten kann, worauf erst mit seiner Bearbeitung begonnen werden kann.

Es ist daher eine Aufgabe der vorliegenden Erfindung, das oben erläuterte Verfahren und die Vorrichtung zum Transport von flachen Werkstücken so weiterzubilden, dass der Durchsatz an Werkstücken durch den Arbeitsbereich signifikant erhöht werden kann.

Die vorliegende Erfindung löst diese Aufgabe durch Bereitstellen eines Verfahrens mit den Merkmalen des Anspruchs 1 sowie einer Vorrichtung mit den Merkmalen des Anspruchs 7. Vorteilhafte Ausgestaltungen der Erfindung gehen aus den Unteransprüchen und der Beschreibung hervor.

Die Erfindung sieht ein Verfahren und eine Vorrichtung zum Transport von flachen Werkstücken mit einer Werkstücklänge und einer Werkstückbreite, insbesondere von schlauchförmigen Sackkörpern, vor. Die flachen Werkstücke werden in ihrer Längsrichtung hintereinander angeordnet einzeln oder zusammenhängend auf einer Längstransportvorrichtung in einer Längstransportrichtung zu einem Arbeitsbereich hin transportiert. Der Arbeitsbereich ist gegebenenfalls mit einer Schneideeinrichtung zum Vereinzeln eines führenden Werkstücks versehen, was dann notwendig ist, wenn zusammenhängende Werkstücke transportiert werden. Vom Arbeitsbereich werden die Werkstücke mittels einer Quertransportvorrichtung, auf der die Werkstücke in ihrer Breitenrichtung hintereinander angeordnet sind, in einer orthogonal zur Längstransportrichtung ausgerichteten Quertransportrichtung weggefördert. Im Arbeitsbereich ist zumindest ein sich in der Quertransportrichtung über zumindest einen Teil der Werkstückbreite, vorzugsweise über die gesamte Werkstückbreite erstreckender Werkstückhalter angeordnet, der zwischen einer Haltestellung und einer offenen Stellung verstellbar ist, um ein im Arbeitsbereich befindliches Werkstück temporär festzuhalten. Der zumindest eine Werkstückhalter umfasst zumindest zwei in Bezug auf die Quertransportrichtung zueinander versetzte Halteabschnitte, die - in Quertransportrichtung gesehen - sukzessive von hinten nach vorne von der offenen Stellung in die Haltestellung bringbar sind.

Durch diese erfindungsgemäßen Maßnahmen kann das Einleiten der Bewegung der Halteabschnitte des Werkstückhalters von der offenen Stellung in die Haltestellung früher initiiert werden als bei Maschinen nach dem Stand der Technik und dadurch die Taktfrequenz des Werkstückhalters erhöht werden, was zu einem erhöhten Durchsatz an Werkstücken durch den Arbeitsbereich führt.

Der Durchsatz an Werkstücken durch den Arbeitsbereich kann optimiert werden, wenn die zumindest zwei Halteabschnitte des zumindest einen Werkstückhalters so gesteuert werden, dass sie bereits sukzessive in Haltestellung und damit mit dem führenden von der Längstransportvorrichtung in den Arbeitsbereich geförderten führenden Werkstück in Haltekontakt gebracht werden, während ein vorheriges Werkstück von der Quertransportrichtung aus dem Arbeitsbereich weggefördert wird, aber den Arbeitsbereich noch nicht vollständig verlassen hat, wobei nur jene Halteabschnitte in Haltestellung gebracht werden, von deren Position das vorangegangene Werkstück bereits weggefördert worden ist. Bevorzugt sind die Halteabschnitte unabhängig voneinander bewegbar, z.B. mittels Nocken, oder elektromechanischer Aktuatoren, oder hydraulischer oder pneumatischer Kolben-Zylinder-Elemente.

Es sei erwähnt, dass die Begriffe "Werkstücklänge" und "Werkstückbreite" lediglich zur Kennzeichnung der geometrischen Ausrichtung des Werkstücks dienen, nicht aber notwendigerweise bedeuten, dass die Werkstücklänge größer sein muss als die Werkstückbreite. Der Begriff "Längsrichtung" ist als in Richtung der "Werkstücklänge" zu verstehen; der Begriff "querrichtung" ist als in Richtung der "Werkstückbreite" zu verstehen.

Für die meisten Anwendungsfälle erweist es sich aufgrund des einfachen Aufbaus als zweckmäßig, wenn die Halteabschnitte in Quertransportrichtung in einer Linie angeordnet sind. Je nach Konfiguration des Werkstücks und daran vorzunehmendem Bearbeitungsvorgang kann es allerdings auch vorteilhaft sein, wenn die Halteabschnitte in Längstransportrichtung zueinander versetzt sind.

In einer Ausführungsform der Erfindung umfasst der zumindest eine Werkstückhalter eine Aneinanderreihung einer Vielzahl an in Bezug auf die Quertransportrichtung zueinander versetzten Halteabschnitten, wobei die Halteabschnitte - in Quertransportrichtung gesehen - mittels Aktuatoren sukzessive von hinten nach vorne von der offenen Stellung in die Haltestellung bringbar sind. Als Aktuatoren werden vorzugsweise Federn, Magnete, elektromagnetische, pneumatische, hydraulische Aktuatoren und/oder Nocken gewählt.

Eine für die Zusammenarbeit mit dem erfindungsgemäßen Werkstückhalter besonders gut geeignete Schneideeinrichtung umfasst ein in Quertransportrichtung von hinten nach vorne durch das Werkstück bewegliches Messer, wobei das Messer vorzugsweise entlang einer Umlaufbahn geführt ist. Mit dieser Schneideeinrichtung sind höchste Durchsatzraten an Werkstücken realisierbar, wobei die Schneideeinrichtung vorteilhaft für das Vereinzeln von Werkstücken eingesetzt wird. Wenn das Messer auf einer Umlaufbahn geführt ist, kann es mit gleichförmiger Geschwindigkeit geführt werden, was den Energieverbrauch für den Antrieb senkt, die Lebensdauer erhöht und die Wartungsarbeiten reduziert.

Die Werkstücke können im Arbeitsbereich neben dem Schneiden einem oder mehreren weiteren Bearbeitungsvorgängen unterzogen werden, wozu in vorteilhaften Ausgestaltungen der Erfindung im Arbeitsbereich Werkstückbearbeitungseinrichtungen, insbesondere Druck- und/oder Etikettier- und/oder Qualitätskontrollgeräte, wie z.B. Kameras oder Bestrahlungsgeräte für elektromagnetische Strahlung (Licht, Röntgenstrahlen, etc.) angeordnet sind.

Damit die Werkstücke im Arbeitsbereich gespannt festgehalten werden können, insbesondere wenn zusammenhängende Werkstücke transportiert werden, kann stromaufwärts vom Arbeitsbereich zumindest eine Werkstück-Klemmeinrichtung vorgesehen werden, die in Zusammenwirken mit dem zumindest einen Werkstückhalter Werkstücke festhält.

Die Erfindung wird nun anhand von Ausführungsbeispielen unter Bezugnahme auf die Zeichnungen näher erläutert.
Fig. 1 bis Fig. 4 zeigen schematische, perspektivische Ansichten einer ersten Ausführungsform einer erfindungsgemäßen Vorrichtung zum Transport von flachen Werkstücken, in der das erfindungsgemäße Verfahren abläuft.
Fig. 5 zeigt eine schematische Darstellung eines Teils einer Sackherstellungsanlage, in der die erfindungsgemäße Vorrichtung zum Transport von flachen Werkstücken verwendet wird.
Fig. 6 zeigt eine schematische Seitenansicht einer Variante der erfindungsgemäßen Vorrichtung zum Transport von flachen Werkstücken.
Fig. 7a und Fig. 7b zeigen zwei verschiedene Verfahrensschritte an der erfindungsgemäßen Vorrichtung zum Transport von flachen Werkstücken.
Fig. 8 zeigt schematisch eine Ausführungsform eines alternativen Werkstückhalters in der erfindungsgemäßen Vorrichtung zum Transport von flachen Werkstücken.

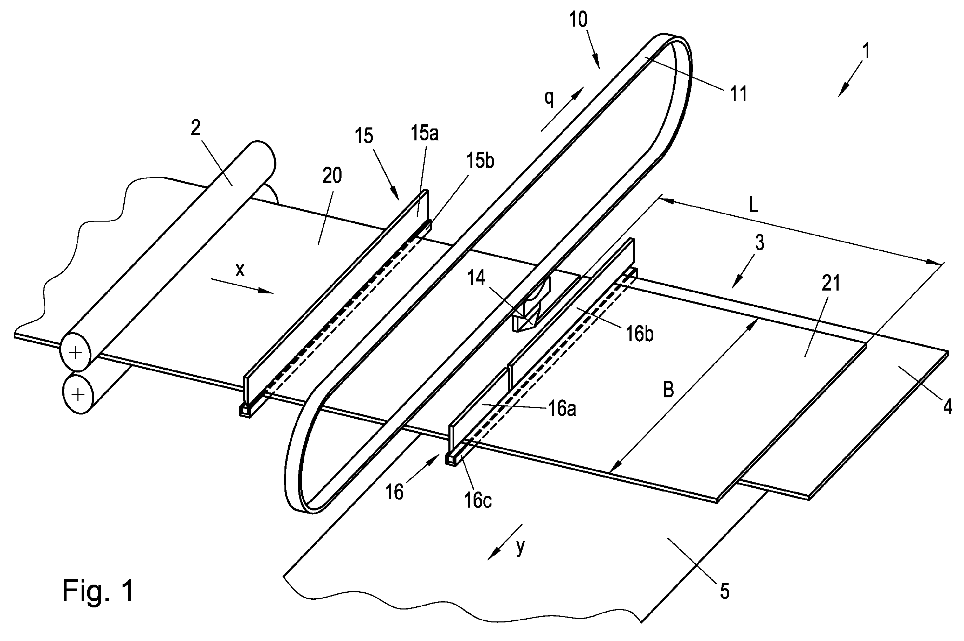

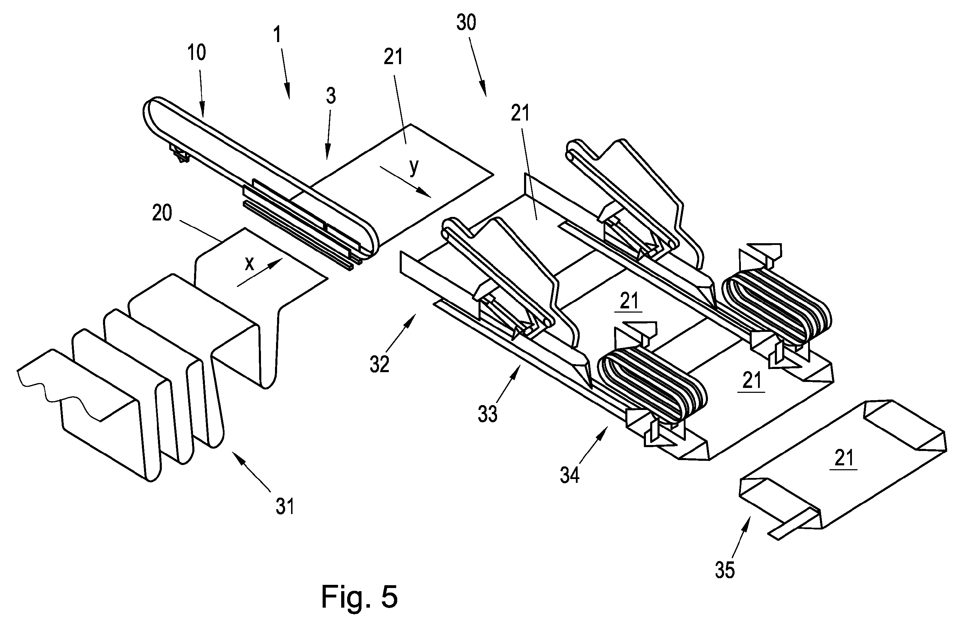

Ein Ausführungsbeispiel einer erfindungsgemäßen Vorrichtung 1 zum Transport von flachen Werkstücken 20, 21 mit einer Werkstücklänge L und einer Werkstückbreite B sowie der Ablauf des erfindungsgemäßen Verfahrens in der Vorrichtung 1 werden nun anhand der schematischen, perspektivischen Ansichten von Fig. 1 bis Fig. 4 näher erläutert. Die Vorrichtung 1 zum Transport von flachen Werkstücken ist Teil einer Anlage zur Herstellung von Säcken, die später anhand der Fig. 5 erklärt werden wird. Bei den flachen Werkstücken 20, 21 handelt es sich um schlauchförmige Sackkörper, insbesondere Sackkörper aus Gewebe aus verstreckten Kunststoffbändchen, das gegebenenfalls beschichtet ist, oder aus Kunststofffolie, oder aus Verbundmaterialien aus Gewebe und Kunststofffolien.

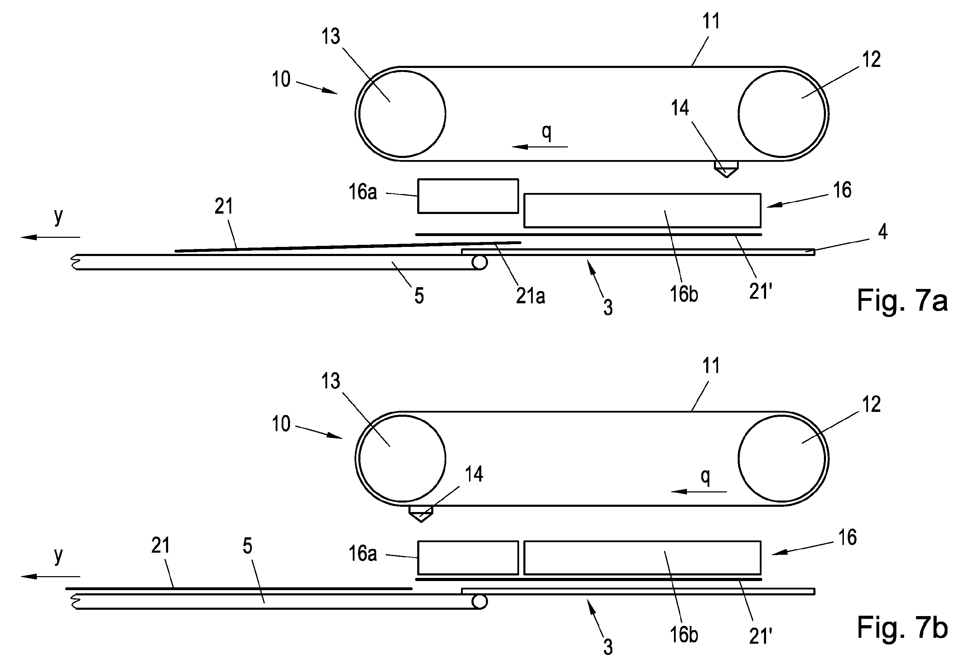

Die Werkstücke 20 werden zunächst in ihrer Längsrichtung hintereinander angeordnet zusammenhängend in Form eines kontinuierlichen Schlauchs von einer nicht dargestellten Materialrolle abgewickelt und mittels einer Längstransportvorrichtung 2, die z.B. als angetriebenes Walzenpaar ausgeführt ist, in einer Längstransportrichtung x zu einem Arbeitsbereich 3 transportiert. Im Arbeitsbereich 3 ist ein Arbeitstisch 4 angeordnet. Benachbart zum Arbeitstisch 4 ist eine Quertransportvorrichtung 5 vorgesehen, die in diesem Ausführungsbeispiel als Förderband ausgebildet ist, das nicht dargestellte Klemmmittel für Werkstücke, z.B. Greifer oder Magneten, aufweist. Die Quertransportvorrichtung 5 fördert einzelne Werkstücke 21, die in ihrer Breitenrichtung hintereinander angeordnet sind, in einer orthogonal zur Längstransportrichtung x ausgerichteten Quertransportrichtung y von dem Arbeitsbereich 3 weg. Die Vereinzelung eines führenden Werkstücks 21 von den zusammenhängenden Werkstücken 20 erfolgt mittels einer Schneideeinrichtung 10, die ein in Quertransportrichtung y durch die Werkstücke hindurch bewegliches Messer 14 umfasst, wobei das Messer 14 entlang einer Umlaufbahn geführt wird, die durch ein in Umlaufrichtung q umlaufendes, quer zur Längstransportrichtung x ausgerichtetes Endlosband 11, an dem das Messer 14 befestigt ist, definiert ist. Das Endlosband 11 läuft um zwei Rollen herum, die aus Gründen der Klarheit in Fig. 1 weggelassen wurden, jedoch in den Figuren 7a und 7b als Rollen 12, 13 dargestellt sind. Zumindest eine der beiden Rollen 12, 13 ist motorisch angetrieben. In Fig. 1 ist das Messer 14 in einer Position dargestellt, in der es ca. ein Drittel der Werkstückbreite durchtrennt hat.

Damit der Schneidevorgang qualitativ hochwertig erfolgt, d.h. ein glatter Schnitt produziert wird, ist es notwendig, die Werkstücke 20, 21 festzuhalten. Dies erfolgt einerseits durch eine stromaufwärts vom Arbeitsbereich 3 angeordnete Werkstück-Klemmeinrichtung 15, die einen über dem Werkstück 20 angeordneten, sich quer über die Werkstückbreite erstreckenden, hochhebbaren und absenkbaren Klemmbalken 15a und eine unter dem Werkstück 20 in Ausrichtung mit dem Klemmbalken 15a angeordnete stationäre Gegenleiste 15b umfasst. Andererseits erfolgt das Festhalten des Werkstücks 21 im Arbeitsbereich 3 durch einen sich über die Werkstückbreite erstreckenden Werkstückhalter 16, der zwischen einer Haltestellung und einer offenen Stellung absenkbar und hochhebbar ist, wobei der Werkstückhalter 16 zumindest zwei in Bezug auf die Quertransportrichtung y zueinander versetzte Halteabschnitte 16a, 16b umfasst, die - in Quertransportrichtung y gesehen - sukzessive von hinten nach vorne von der offenen Stellung in die Haltestellung bringbar sind. In diesem Ausführungsbeispiel sind die Halteabschnitte 16a, 16b als in einer Linie ausgerichtete, mittels nicht dargestellter hydraulischer, pneumatischer oder elektromagnetischer Antriebsmittel auf- und ab bewegbare Haltebalken ausgebildet, die in der Haltestellung mit einer darunter angeordneten stationären Gegenleiste 16c kooperieren und das Werkstück 21 dazwischen festhalten. Fig. 1 zeigt einen Verfahrensschritt, in dem sich beide Halteabschnitte 16a, 16b in der Haltestellung befinden.

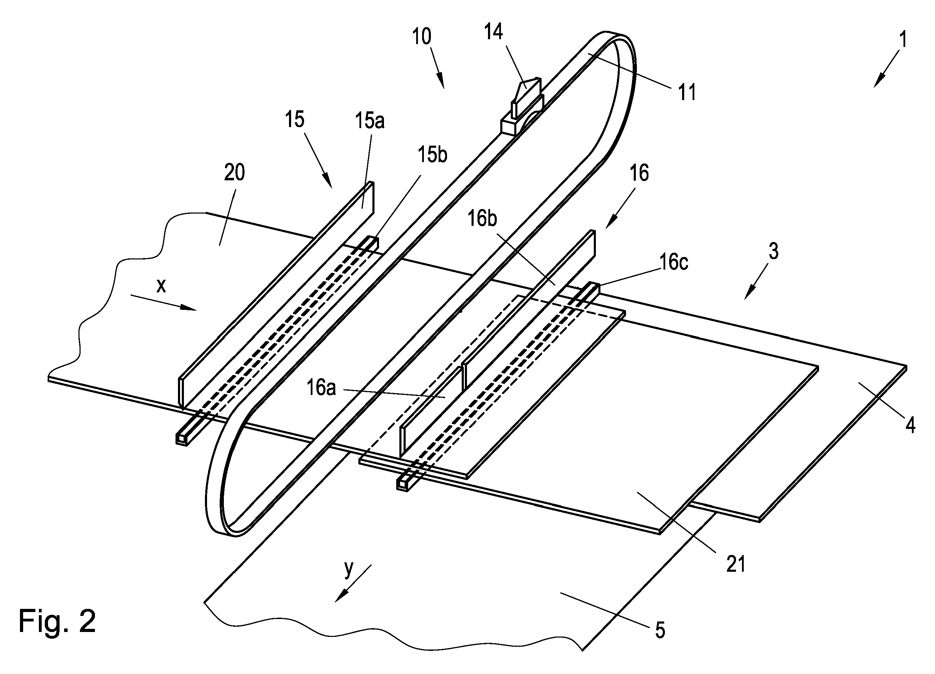

Fig. 2 zeigt einen darauffolgenden Verfahrensschritt, bei dem das Messer 14 das einzelne Werkstück 21 bereits vollständig von den zusammenhängenden Werkstücken 20 abgeschnitten hat und sich zur Oberseite des Endlosriemens 11 und somit außer Kontakt mit den Werkstücken 20, 21 bewegt hat. Das einzelne Werkstück 21 wird aus dem Arbeitsbereich 3 mittels der Quertransportvorrichtung 5 in Quertransportrichtung y weggefördert, wobei in Fig. 2 ein Zustand zu sehen ist, in dem das einzelne Werkstück 21 noch teilweise auf dem Arbeitstisch 4 aufliegt. Der Klemmbalken 15a der Werkstück-Klemmeinrichtung 15 und beide Halteabschnitte 16a, 16b des Werkstückhalters 16 sind in ihre offene Stellung hochgehoben, sodass einerseits das einzelne Werkstück 21 ungehindert auf der Quertransportvorrichtung 5 weggefördert werden kann und andererseits gleichzeitig das zusammenhängende Werkstück 20 durch die offene Werkstück-Klemmeinrichtung 15 und den offenen Werkstückhalter 16 hindurch in den Arbeitsbereich 3 vorgeschoben werden kann. Man erkennt in Fig. 2 deutlich, dass der führende Bereich des in den Arbeitsbereich 3 hineingeförderten zusammenhängenden Werkstücks 20 einen Teil des einzelnen Werkstück 21 überlappt, das noch nicht zur Gänze aus dem Arbeitsbereich 3 weggefördert worden ist.

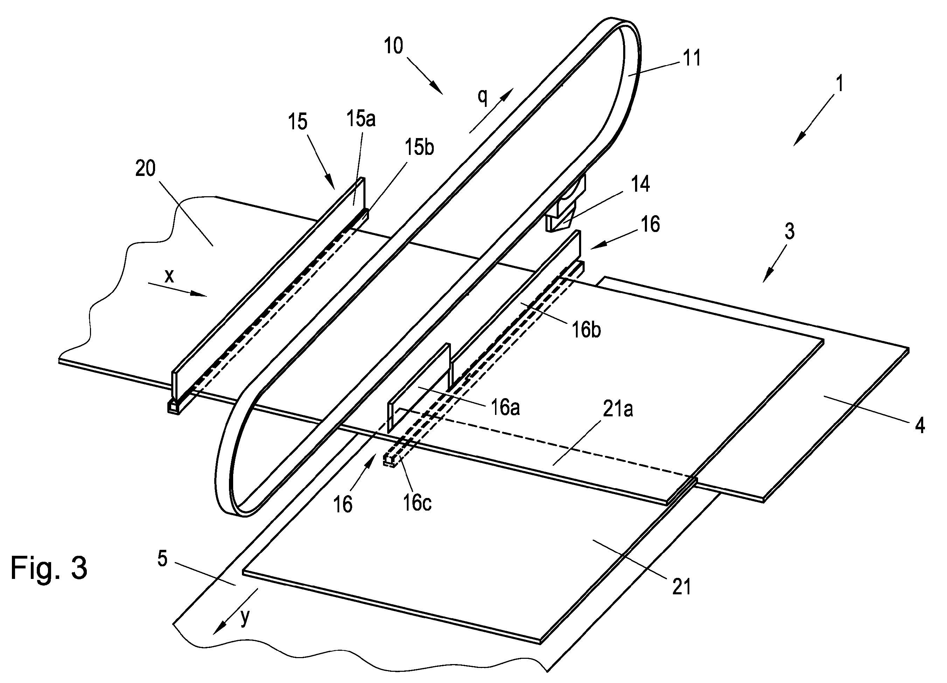

Fig. 3 zeigt einen nachfolgenden Verfahrens schritt, bei dem sich das zusammenhängende Werkstück 20 bereits vollständig in den Arbeitsbereich 3 hineinbewegt hat und das Messer 14 sich knapp hinter dem Werkstück 20 befindet und wenig später in das Werkstück 20 eindringen wird (vergleiche auch Fig. 7a). Die Werkstück-Klemmeinrichtung 15 ist bereits in ihre Haltestellung gebracht worden. Ebenso ist der - in Quertransportrichtung y gesehen - hintere Halteabschnitt 16b des Werkstückhalters 16 bereits in seine Haltestellung abgesenkt worden, nicht jedoch der vordere Halteabschnitt 16a, der sich noch immer in seiner geöffneten Stellung befindet. Der Grund dafür ist, dass das einzelne Werkstück 21 von der Quertransportvorrichtung 5 noch nicht vollständig aus dem Arbeitsbereich 3 weggefördert wurde, sondern sich sein hinterer Bereich 21a noch immer im Arbeitsbereich 3 befindet. Wäre der vordere Halteabschnitt 16a des Werkstückhalters 16 bereits in seine Haltestellung gebracht, so würde dies das Wegfördern des einzelnen Werkstücks 21 behindern. Dadurch, dass sich der hintere Halteabschnitt 16b jedoch schon in seiner Haltestellung befindet, kann bereits mit dem Schneidevorgang begonnen werden. Diese sukzessive Absenkung der Halteabschnitte 16b, 16a in ihre Haltestellung stellt einen großen Geschwindigkeitsvorteil gegenüber dem Stand der Technik dar, bei dem ein Werkstückhalter erst dann in seine Haltestellung gebracht werden konnte, nachdem das einzelne Werkstück 21 vollständig den Arbeitsbereich 3 verlassen hatte, und erst dann mit dem Schneiden begonnen werden konnte, wenn dieser Werkstückhalter seine Haltestellung eingenommen hatte. Da der erfindungsgemäße Werkstückhalter 16 zumindest zwei in Bezug auf die Quertransportrichtung y zueinander versetzte Halteabschnitte 16a, 16b umfasst, die - in Quertransportrichtung y gesehen - sukzessive von hinten nach vorne mit dem Werkstück in Haltekontakt bringbar sind, kann auch der Bearbeitungsvorgang, hier das Schneiden, entsprechend früher beginnen.

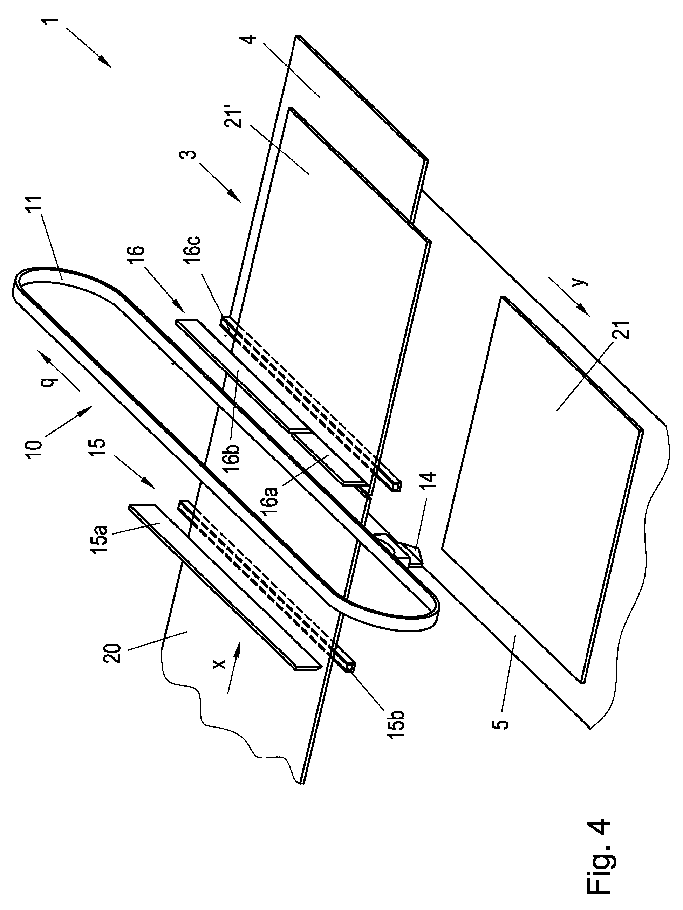

Fig. 4 zeigt einen letzten Verfahrensschritt, bei dem das Messer 14 bereits vollständig durch das Werkstück 20 hindurchgegangen ist und ein weiteres einzelnes Werkstück 21' von den zusammenhängenden Werkstücken 20 abgeschnitten hat. Das vorangegangene einzelne Werkstück 21 ist zu diesem Zeitpunkt von der Quertransportvorrichtung 5 bereits vollständig aus dem Arbeitsbereich 3 weggefördert worden. Sowohl der Klemmbalken 15a der Werkstück-Klemmeinrichtung 15 als auch beide Halteabschnitte 16a, 16b des Werkstückhalters 16 sind in ihre offene Stellung hochgehoben worden, wobei die beiden Halteabschnitte 16a, 16b entweder gleichzeitig oder nacheinander (zuerst der hintere Halteabschnitt 16b, dann der vordere Halteabschnitt 16a) hochgehoben werden können. Somit kann das weitere einzelne Werkstück 21' von der Quertransportvorrichtung 5 aus dem Arbeitsbereich 3 weggefördert werden.

Dieses erfindungsgemäße Prinzip des Werkstückhalters 16 mit mehreren Halteabschnitten 16a, 16, die sukzessive bzw. unabhängig voneinander in die Haltestellung gebracht werden können, ist in Fig. 7a und Fig. 7b nochmals in schematischen Vorderansichten erläutert. Es ist zu beachten, dass diese Figuren lediglich zur Erklärung der Verfahrensschritte dienen und aus Gründen der besseren Verständlichkeit geometrisch verzerrt dargestellt sind. Insbesondere ist die Schneideinrichtung 10 höher gezeichnet worden, als sie tatsächlich ist um die Stellungen des Messers 14 besser zeigen zu können. Fig. 7a zeigt eine momentane Stellung des Messers 14 zu einem Zeitpunkt, der kurz nach jenem in Fig. 3 dargestellten Zeitpunkt liegt, d.h. einen Zeitpunkt, bei dem das Messer 14 bereits eine kurze Strecke in das Werkstück 20 eingedrungen ist, um ein weiteres einzelnes Werkstück 21' abzuschneiden. Der hintere Halteabschnitt 16b des Werkstückhalters 16 ist in seine Haltestellung abgesenkt worden, der vordere Halteabschnitt 16a befindet sich noch in der offenen Stellung. Das vorangegangene einzelne Werkstück 21 wurde von der Quertransportvorrichtung 5 noch nicht vollständig aus dem Arbeitsbereich 3 weggefördert, sondern sein hinterer Bereich 21a befindet sich noch immer im Arbeitsbereich 3. Fig. 7b zeigt eine momentane Stellung des Messers 14 kurz vor dem vollständigen Abtrennen des weiteren einzelnen Werkstücks 21'. Beide Halteabschnitte 16a, 16b des Werkstückhalters 16 sind in ihre Haltestellung abgesenkt. Das vorangegangene einzelne Werkstück 21 wurde von der Quertransportvorrichtung 5 bereits vollständig aus dem Arbeitsbereich 3 weggefördert.

Bei den bisherigen Ausführungsformen der erfindungsgemäßen Vorrichtung 1 ist nur ein Werkstückhalter 16 verwendet worden. Es versteht sich aber, dass auch mehrere Werkstückhalter 16 verwendet werden können. Der zumindest eine Werkstückhalter 16 umfasst unabhängig voneinander zwischen einer Haltestellung und einer offenen Stellung verstellbare Halteabschnitte 16a, 16b, die aber eine gemeinsame Gegenleiste 16c haben. Die Halteabschnitte 16a, 16b sind in Quertransportrichtung y in einer Linie angeordnet. Alternativ dazu könnten die Halteabschnitte in Längstransportrichtung x zueinander versetzt sein. Die Halteabschnitte 16a, 16b werden z.B. mittels (nicht dargestellter) Nocken, oder elektromechanischer Aktuatoren, oder hydraulischer oder pneumatischer Kolben-Zylinder-Elemente zwischen der Haltestellung und der offenen Stellung hin und her bewegt. Die Steuerung der genannten Antriebselemente erfolgt zweckmäßig über eine zentrale Maschinensteuerung.

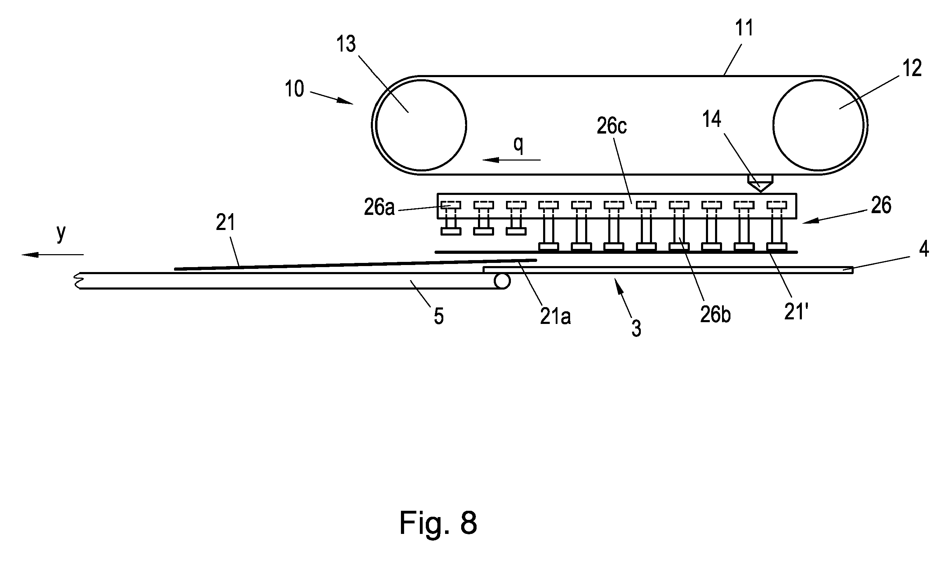

Eine alternative Ausführungsform eines in der Vorrichtung 1 zum Transport von flachen Werkstücken verwendbaren Werkstückhalters 26 ist in Fig. 8 schematisch in Vorderansicht dargestellt. Diese Darstellung entspricht jener der Fig. 7a, mit dem Unterschied, dass anstelle des Werkstückhalters 16 ein Werkstückhalter 26 vorgesehen ist, der eine Aneinanderreihung einer Vielzahl an in Bezug auf die Quertransportrichtung y zueinander versetzten Halteabschnitten 16a umfasst, die mittels Aktuatoren 16b unabhängig voneinander oder gruppenweise sukzessive von hinten nach vorne von der offenen Stellung in die Haltestellung und vice versa bringbar sind. Die Aktuatoren 16b können Federn, Magnete, elektromagnetische, pneumatische, hydraulische Aktuatoren und/oder Nocken umfassen.

In der Darstellung von Fig. 8 befinden sich die hinteren 8 Halteabschnitte 16a in Haltestellung, die vorderen 3 Halteabschnitte 16a in der offenen Stellung. Erhöht man die Anzahl der Halteabschnitte und Aktuatoren immer weiter, so gelangt man zu einem quasikontinuierlichen Werkstückhalter, bei dem die Halteabschnitte (fast) kontinuierlich sukzessive in die Haltestellung bringbar sind. Ein kontinuierlich wirkender Werkstückhalter könnte beispielsweise durch eine konvex gebogene, in Quertransportrichtung ausgerichtete Blattfeder realisiert werden, die am hinteren Ende angelenkt ist und am vorderen Ende hochgehoben und abgesenkt wird. In einer weiteren alternativen Ausführungsform des Werkstückhalters umfasst dieser Rollen, die in Synchronisation mit und parallel zu dem Messer 14 mitfahren und das Werkstück somit nur in jenem Bereich festhalten, in dem das Messer 14 momentan schneidet.

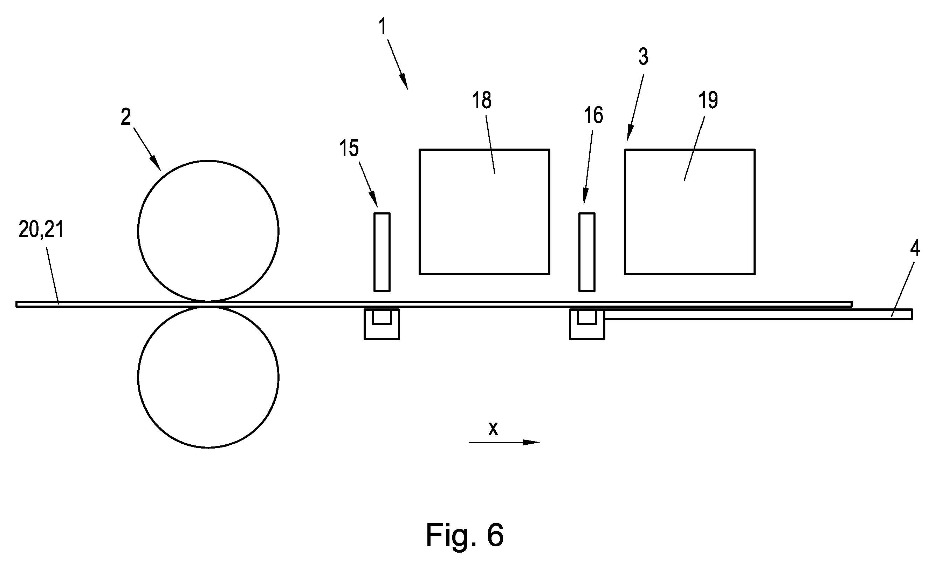

Die Werkstücke 20, 21 können im Arbeitsbereich 3 zusätzlich oder alternativ zum Schneiden anderen Bearbeitungsvorgängen unterzogen werden. Fig. 6 zeigt eine Seitenansicht der Vorrichtung 1 zum Transport von flachen Werkstücken, in der zwischen der Werkstück-Klemmeinrichtung 15 und dem Werkstückhalter 16 eine erste Werkstückbearbeitungseinrichtung 18, beispielsweise eine Schneideinrichtung (wenn zusammenhängende Werkstück 20 transportiert werden) oder ein Qualitätskontrollgerät, und über dem Arbeitstisch 4 eine zweite Werkstückbearbeitungseinrichtung 19, beispielsweise ein Druck- und/oder Etikettiergerät, angeordnet sind. Je nach Art der zweiten Werkstückbearbeitungseinrichtung 19 kann es zweckmäßig sein, zusätzliche Werkstückhalter 16 (oder 26) im Arbeitsbereich 3 vorzusehen, insbesondere zumindest einen weiteren Werkstückhalter 16 (oder 26) in der Zeichnung rechts von der zweiten Werkstückbearbeitungseinrichtung 19.

Fig. 5 zeigt in einer schematischen, perspektivischen Ansicht einen Teil einer Anlage 30 zur Herstellung von Säcken, in der die erfindungsgemäße Vorrichtung 1 zum Transport von flachen Werkstücken verwendet wird. Zusammenhängende flache Werkstücke 20 in Form eines kontinuierlichen Schlauches aus Gewebe aus verstreckten Kunststoffbändchen, das gegebenenfalls beschichtet ist, oder aus Kunststofffolie, oder aus Verbundmaterialien aus Gewebe und Kunststofffolien, werden von einer nicht dargestellten Materialrolle in Längsrichtung x zur Vorrichtung 1 zum Transport von flachen Werkstücken zugeführt. Damit die schwere Materialrolle kontinuierlich bewegt werden kann, die Werkstücke 20 aber taktweise in den Arbeitsbereich 3 zugeführt werden können, ist ein Zwischenspeicher 31 vorgesehen. Nachdem von den zusammenhängenden Werkstücken 20 mittels der Schneideeinrichtung 10 ein einzelnes Werkstück 21, d.h. ein schlauchförmiger Sackkörper, abgeschnitten wurde, wird dieses einzelne Werkstück 21 in Quertransportrichtung y vom Arbeitsbereich 3 zu weiteren Bearbeitungsstationen weitergefördert, wobei die einzelnen Werkstücke 21 in ihrer Breitenrichtung hintereinander und in einem Abstand voneinander angeordnet sind. Die weiteren Bearbeitungsstationen umfassen eine Endenfaltstation 32 zum Auffalten der offenen Enden der schlauchförmigen Sackkörper, eine Endenöffnungsstation 33 zum Auseinanderziehen der gefalteten offenen Enden der schlauchförmigen Sackkörper, eine Faltstation 34 zum Ausbilden gefalteter Böden und eine Ventilzettelklebestation 35, in der auf einen gefalteten Boden eines jeden Sackkörpers ein Ventilblatt aufgeklebt wird.

## Patentansprüche

1. Verfahren zum Transport von flachen Werkstücken (20, 21, 21') mit einer Werkstücklänge (L) und einer Werkstückbreite (B), insbesondere von schlauchförmigen Sackkörpern,
wobei die Werkstücke (20, 21, 21') in ihrer Längsrichtung hintereinander angeordnet einzeln oder zusammenhängend in einer Längstransportrichtung (x) zu einem Arbeitsbereich (3) transportiert werden, in dem bei zusammenhängenden Werkstücken (20) das führende Werkstück (21, 21') vereinzelt wird,
wobei die Werkstücke (21, 21') in ihrer Breitenrichtung hintereinander angeordnet in einer orthogonal zur Längstransportrichtung (x) ausgerichteten Quertransportrichtung (y) von dem Arbeitsbereich (3) weggefördert werden,
wobei im Arbeitsbereich (3) zumindest ein sich in der Quertransportrichtung (y) über zumindest einen Teil der Werkstückbreite, vorzugsweise über die gesamte Werkstückbreite erstreckender Werkstückhalter (16, 26) vorgesehen ist, um ein im Arbeitsbereich (3) befindliches Werkstück (20, 21, 21') temporär festzuhalten,
**dadurch gekennzeichnet,**
**dass** der Werkstückhalter (16, 26) zumindest zwei in Bezug auf die Quertransportrichtung (y) zueinander versetzte Halteabschnitte (16a, 16b, 26a) umfasst, die - in Quertransportrichtung (y) gesehen - sukzessive von hinten nach vorne mit dem Werkstück (20, 21, 21') in Haltekontakt bringbar sind.

2. Verfahren nach Anspruch 1, **dadurch gekennzeichnet, dass** die zumindest zwei Halteabschnitte (16a, 16b, 26a) des zumindest einen Werkstückhalters (16, 26) bereits sukzessive mit dem Werkstück (20, 21, 21') in Haltekontakt gebracht werden, während ein vorheriges Werkstück (20, 21, 21') in der Quertransportrichtung aus dem Arbeitsbereich weggefördert wird, aber den Arbeitsbereich noch nicht vollständig verlassen hat, wobei nur jene Halteabschnitte mit dem Werkstück (20, 21, 21') in Haltekontakt gebracht werden, von deren Position das vorangegangene Werkstück (20, 21, 21') bereits weggefördert worden ist.

3. Verfahren nach Anspruch 1 oder 2, **dadurch gekennzeichnet, dass** die Halteabschnitte (16a, 16b, 26a) unabhängig voneinander bewegt werden.

4. Verfahren nach einem der Ansprüche 1 bis 3, **dadurch gekennzeichnet, dass** der zumindest eine Werkstückhalter (16, 26) eine Aneinanderreihung einer Vielzahl an in Bezug auf die Quertransportrichtung zueinander versetzten Halteabschnitten (16a, 16b, 26a) umfasst, wobei die Halteabschnitte (16a, 16b, 26a) - in Quertransportrichtung gesehen - einzeln oder gruppenweise sukzessive von hinten nach vorne in Haltekontakt mit dem Werkstück (20, 21, 21') bringbar sind.

5. Verfahren nach einem der Ansprüche 1 bis 4, **gekennzeichnet durch** eine Schneideeinrichtung (10), die ein in Quertransportrichtung (y) von hinten nach vorne **durch** das Werkstück (20, 21, 21') hindurchführbares Messer (14) umfasst.

6. Verfahren nach einem der Ansprüche 1 bis 5, **dadurch gekennzeichnet, dass** das Werkstück (20, 21, 21') im Arbeitsbereich (3) zumindest einem Bearbeitungsvorgang, insbesondere einem Druck- und/oder Etikettiervorgang oder einer Qualitätskontrolle unterzogen wird.

7. Vorrichtung zum Transport von flachen Werkstücken (20, 21, 21') mit einer Werkstücklänge (L) und einer Werkstückbreite (B), insbesondere von schlauchförmigen Sackkörpern,
mit einer Längstransportvorrichtung (2), auf der die Werkstücke (20, 21, 21') in ihrer Längsrichtung hintereinander angeordnet einzeln oder zusammenhängend in einer Längstransportrichtung (x) zu einem Arbeitsbereich (3) transportiert werden, der gegebenenfalls mit einer Schneideeinrichtung (10) zum Vereinzeln eines führenden Werkstücks (21, 21') von zusammenhängenden Werkstücken (20) versehen ist,
mit einer Quertransportvorrichtung (5), auf der die Werkstücke (21, 21') in ihrer Breitenrichtung hintereinander angeordnet in einer orthogonal zur Längstransportrichtung (x) ausgerichteten Quertransportrichtung (y) von dem Arbeitsbereich (3) weggefördert werden,
mit zumindest einem im Arbeitsbereich (3) angeordneten, sich in der Quertransportrichtung (y) über zumindest einen Teil der Werkstückbreite, vorzugsweise über die gesamte Werkstückbreite erstreckenden Werkstückhalter (16, 26), der zwischen einer Haltestellung und einer offenen Stellung verstellbar ist, um ein im Arbeitsbereich befindliches Werkstück (20, 21, 21') temporär festzuhalten,
**dadurch gekennzeichnet,**
**dass** der Werkstückhalter (16, 26) zumindest zwei in Bezug auf die Quertransportrichtung (y) zueinander versetzte Halteabschnitte (16a, 16b, 26a) umfasst, die - in Quertransportrichtung (y) gesehen - sukzessive von hinten nach vorne von der offenen Stellung in die Haltestellung bringbar sind.

8. Vorrichtung nach Anspruch 7, **dadurch gekennzeichnet, dass** die zumindest zwei Halteabschnitte (16a, 16b, 26a) des zumindest einen Werkstückhalters (16, 26) so gesteuert werden, dass sie bereits sukzessive in Haltestellung und damit mit dem führenden von der Längstransportvorrichtung in den Arbeitsbereich geförderten führenden Werkstück (20, 21, 21') in Haltekontakt gebracht werden, während ein vorangegangenes Werkstück (21) von der Quertransportrichtung (5) aus dem Arbeitsbereich (3) weggefördert wird, aber den Arbeitsbereich (3) noch nicht vollständig verlassen hat, wobei nur jene Halteabschnitte (16a, 16b, 26a) in Haltestellung gebracht werden, von deren Position das vorangegangene Werkstück (21) bereits weggefördert worden ist.

9. Vorrichtung nach einem der Ansprüche 7 oder 8, **dadurch gekennzeichnet, dass** der zumindest eine Werkstückhalter (26) eine Aneinanderreihung einer Vielzahl an in Bezug auf die Quertransportrichtung zueinander versetzten Halteabschnitten (26a) umfasst, wobei die Halteabschnitte - in Quertransportrichtung gesehen - mittels Aktuatoren (26b) sukzessive von hinten nach vorne von der offenen Stellung in die Haltestellung bringbar sind.

10. Vorrichtung nach einem der Ansprüche 7 bis 9, **dadurch gekennzeichnet, dass** die Halteabschnitte (16a, 16b, 26a) in Quertransportrichtung (y) in einer Linie angeordnet sind.

11. Vorrichtung nach einem der Ansprüche 7 bis 9, **dadurch gekennzeichnet, dass** die Halteabschnitte in Längstransportrichtung (x) zueinander versetzt sind.

12. Vorrichtung nach einem der Ansprüche 9 bis 11, **dadurch gekennzeichnet, dass** die Aktuatoren (26b) Federn, Magnete, elektromagnetische, pneumatische, hydraulische Aktuatoren und/oder Nocken umfassen.

13. Vorrichtung nach einem der Ansprüche 7 bis 12, **gekennzeichnet durch** eine Schneideeinrichtung (10), die ein in Quertransportrichtung (y) von hinten nach vorne **durch** das Werkstück (20, 21, 21') bewegliches Messer (14) umfasst, wobei das Messer (14) vorzugsweise entlang einer Umlaufbahn geführt ist.

14. Vorrichtung nach einem der Ansprüche 7 bis 13, **dadurch gekennzeichnet, dass** im Arbeitsbereich (3) Werkstückbearbeitungseinrichtungen (18, 19), insbesondere Druck- und/oder Etikettier- und/oder Qualitätskontrollgeräte angeordnet sind.

15. Vorrichtung nach einem der Ansprüche 7 bis 14, **dadurch gekennzeichnet, dass** stromaufwärts vom Arbeitsbereich (3) zumindest eine Werkstück-Klemmeinrichtung (15) vorgesehen ist.

## Claims

1. A method of transporting flat workpieces (20, 21, 21') having a workpiece length (L) and a workpiece width (B), in particular tubular bag bodies,
wherein the workpieces (20, 21, 21'), in an arrangement one behind the other in their longitudinal direction, are transported individually or contiguously in a longitudinal transport direction (x) to a working area (3) in which, in case of contiguous workpieces (20), the leading workpiece (21, 21') is separated,
wherein the workpieces (21,21'), in an arrangement one behind the other in their width direction, are conveyed away from the working area (3) in a transverse transport direction (y) oriented orthogonally to the longitudinal transport direction (x),
wherein at least one workpiece holder (16, 26) extending in the transverse transport direction (y) across at least a portion of the workpiece width, preferably across the entire workpiece width, is provided in the working area (3) in order to temporarily retain a workpiece (20, 21, 21') located in the working area (3),
**characterized in that**
the workpiece holder (16, 26) comprises at least two holding portions (16a, 16b, 26a) offset to one another with regard to the transverse transport direction (y), which - viewed in the transverse transport direction (y) - can be brought successively forward from behind into a holding contact with the workpiece (20, 21,21').

2. A method according to claim 1, **characterized in that** the at least two holding portions (16a, 16b, 26a) of the at least one workpiece holder (16, 26) are already brought successively into a holding contact with the workpiece (20, 21,21'), while a preceeding workpiece (20, 21, 21') is being conveyed away from the working area in the transverse transport direction, but has not yet left the working area completely, with only those holding portions being brought into a holding contact with the workpiece (20, 21, 21') from whose positions the preceding workpiece (20, 21, 21') has already been conveyed away.

3. A method according to claim 1 or 2, **characterized in that** the holding portions (16a, 16b, 26a) are moved independently of each other.

4. A method according to any of claims 1 to 3, **characterized in that** the at least one workpiece holder (16, 26) comprises a sequence of a plurality of holding portions (16a, 16b, 26a) offset to one another with regard to the transverse transport direction, wherein the holding portions (16a, 16b, 26a) - viewed in the transverse transport direction - can be brought successively forward from behind into a holding contact with the workpiece (20, 21, 21') individually or in groups.

5. A method according to any of claims 1 to 4, **characterized by** a cutting device (10) which comprises a blade (14) which can be guided forward from behind through the workpiece (20, 21, 21') in the transverse transport direction (y).

6. A method according to any of claims 1 to 5, **characterized in that** the workpiece (20, 21, 21') is subjected to at least one processing operation, in particular a printing and/or labelling operation or a quality control, in the working area (3).

7. A device for transporting flat workpieces (20, 21, 21') having a workpiece length (L) and a workpiece width (B), in particular tubular bag bodies,
comprising a longitudinal transporting device (2) on which the workpieces (20, 21, 21'), in an arrangement one behind the other in their longitudinal direction, are transported individually or contiguously in a longitudinal transport direction (x) to a working area (3), which, optionally, is provided with a cutting device (10) for separating a leading workpiece (21, 21') from contiguous workpieces (20),
comprising a transverse transporting device (5) on which the workpieces (21,21'), in an arrangement one behind the other in their width direction, are conveyed away from the working area (3) in a transverse transport direction (y) oriented orthogonally to the longitudinal transport direction (x),
comprising at least one workpiece holder (16, 26) arranged in the working area (3) and extending in the transverse transport direction (y) across at least a portion of the workpiece width, preferably across the entire workpiece width, which workpiece holder is adjustable between a holding position and an open position in order to temporarily retain a workpiece (20, 21,21') located in the working area,
**characterized in that**
the workpiece holder (16, 26) comprises at least two holding portions (16a, 16b, 26a) offset to one another with regard to the transverse transport direction (y), which - viewed in the transverse transport direction (y) - can successively be brought forward from behind from the open position into the holding position.

8. A device according to claim 7, **characterized in that** the at least two holding portions (16a, 16b, 26a) of the at least one workpiece holder (16, 26) are controlled such that they are already brought successively into the holding position and thereby into a holding contact with the leading workpiece (20, 21,21'), which has been conveyed into the working area by the longitudinal transporting device, while a preceding workpiece (21) is being conveyed away from the working area (3) from the transverse transport direction (5), but has not yet left the working area (3) completely, with only those holding portions (16a, 16b, 26a) being brought into the holding position from whose positions the preceding workpiece (21) has already been conveyed away.

9. A device according to any of claims 7 or 8, **characterized in that** the at least one workpiece holder (26) comprises a sequence of a plurality of holding portions (26a) offset to one another with regard to the transverse transport direction, wherein the holding portions - viewed in the transverse transport direction - can be brought successively forward from behind from the open position into the holding position by means of actuators (26b).

10. A device according to any of claims 7 to 9, **characterized in that** the holding portions (16a, 16b, 26a) are arranged in line in the transverse transport direction (y).

11. A device according to any of claims 7 to 9, **characterized in that** the holding portions are offset to one another in the longitudinal transport direction (x).

12. A device according to any of claims 9 to 11, **characterized in that** the actuators (26b) comprise springs, solenoids, electromagnetic, pneumatic, hydraulic actuators and/or cams.

13. A device according to any of claims 7 to 12, **characterized by** a cutting device (10) which comprises a blade (14) movable forward from behind through the workpiece (20, 21, 21') in the transverse transport direction (y), the blade (14) preferably being guided along a circumferential path.

14. A device according to any of claims 7 to 13, **characterized in that** workpiece processing devices (18, 19), in particular printing and/or labelling and/or quality control devices, are arranged in the working area (3).

15. A device according to any of claims 7 to 14, **characterized in that** at least one workpiece clamping device (15) is provided upstream of the working area (3).

## Revendications

1. Procédé de transport de pièces plates (20, 21, 21') présentant une longueur de pièce (L) et une largeur de pièce (B), en particulier de corps de sacs en forme de tubes flexibles,
où les pièces (20, 21, 21'), disposées individuellement l'une derrière l'autre ou en continuité dans le sens de leur longueur sont transportées dans une direction de transport longitudinale (x) vers une zone de travail (3) où la pièce de tête (21, 21') est séparée en cas de pièces continues (20),
où les pièces (21, 21'), disposées l'une derrière l'autre dans le sens de leur largeur, sont évacuées de la zone de travail (3) dans une direction de transport transversale (y) orthogonale à la direction de transport longitudinale (x),
où dans la zone de travail (3) au moins un porte-pièce (16, 26) s'étendant dans la direction de transport transversale (y) sur au moins une partie de la largeur de pièce, préférentiellement sur toute la largeur de pièce, est prévu pour fixer temporairement une pièce (20, 21, 21') se trouvant temporairement dans la zone de travail (3),
**caractérisé en ce que**
le porte-pièce (16, 26) comprend au moins deux sections de maintien (16a, 16b, 26a) décalées l'une par rapport à l'autre dans la direction de transport transversale (y), lesquelles peuvent être mises en contact de maintien avec la pièce (20, 21, 21') successivement, de l'arrière vers l'avant dans la direction de transport transversale (y).

2. Procédé selon la revendication 1, **caractérisé en ce que** lesdites au moins deux sections de maintien (16a, 16b, 26a) dudit au moins un porte-pièce (16, 26) sont déjà mises successivement en contact de maintien avec la pièce (20, 21, 21') pendant qu'une pièce précédente (20, 21, 21') est évacuée de la zone de travail dans la direction de transport transversale, mais n'a pas encore entièrement quitté la zone de travail, les seules sections de maintien mises en contact de maintien avec la pièce (20, 21, 21') étant celles d'où la pièce précédente (20, 21, 21') a déjà été évacuée.

3. Procédé selon la revendication 1 ou 2, **caractérisé en ce que** les sections de maintien (16a, 16b, 26a) sont déplacées indépendamment les unes des autres.

4. Procédé selon l'une des revendications 1 à 3,
**caractérisé en ce que** ledit au moins un porte-pièce (16, 26) comprend un alignement côte à côte d'une pluralité de sections de maintien (16a, 16b, 26a) décalées les unes par rapport aux autres par rapport à la direction de transport transversale, lesdites sections de maintien (16a, 16b, 26a) pouvant être mises successivement en contact de maintien avec la pièce (20, 21, 21') individuellement ou par groupes, de l'arrière vers l'avant dans la direction de transport transversale.

5. Procédé selon l'une des revendications 1 à 4,
**caractérisé par** un dispositif de coupe (10) comprenant une lame (14) pouvant être guidée au travers de la pièce (20, 21, 21') de l'arrière vers l'avant dans la direction de transport transversale (y).

6. Procédé selon l'une des revendications 1 à 5,
**caractérisé en ce que** la pièce (20, 21, 21') est soumise dans la zone de travail (3) à au moins un processus de traitement, en particulier un processus de compression et/ou d'étiquetage, ou à un contrôle de qualité.

7. Dispositif pour le transport de pièces plates (20, 21, 21') présentant une longueur de pièce (L) et une largeur de pièce (B), en particulier de corps de sacs en forme de tubes flexibles,
avec un dispositif de transport longitudinal (2), sur lequel les pièces (20, 21, 21'), disposées individuellement l'une derrière l'autre ou en continuité dans le sens de leur longueur sont transportées dans une direction de transport longitudinale (x) vers une zone de travail (3), laquelle est le cas échéant pourvue d'un dispositif de coupe (10) pour la séparation d'une pièce de tête (21, 21') en cas de pièces continues (20),
avec un dispositif de transport transversal (5), sur lequel les pièces (21, 21') disposées l'une derrière l'autre dans le sens de leur largeur, sont évacuées de la zone de travail (3) dans une direction de transport transversale (y) orthogonale à la direction de transport longitudinale (x),
avec au moins un porte-pièce (16, 26) disposé dans la zone de travail (3), s'étendant dans la direction de transport transversale (y) sur au moins une partie de la largeur de pièce, préférentiellement sur toute la largeur de pièce, lequel est réglable entre une position de maintien et une position d'ouverture pour fixer temporairement une pièce (20, 21, 21') se trouvant temporairement dans la zone de travail,
**caractérisé en ce que**
le porte-pièce (16, 26) comprend au moins deux sections de maintien (16a, 16b, 26a) décalées l'une par rapport à l'autre dans la direction de transport transversale (y), lesquelles peuvent être passées de la position d'ouverture à la position de maintien successivement, de l'arrière vers l'avant dans la direction de transport transversale (y).

8. Dispositif selon la revendication 7, **caractérisé en ce que** lesdites au moins deux sections de maintien (16a, 16b, 26a) dudit au moins un porte-pièce (16, 26) sont commandées de manière à être déjà passées successivement en position de maintien et donc mises en contact de maintien avec la pièce (20, 21, 21') transportée en tête par le dispositif de transport longitudinal vers la zone de travail, pendant qu'une pièce précédente (21) est évacuée de la zone de travail (3) dans la direction de transport transversale (5), mais n'a pas encore entièrement quitté la zone de travail (3), les seules sections de maintien (16a, 16b, 26a) passées en position de maintien étant celles d'où la pièce précédente (21) a déjà été évacuée.

9. Dispositif selon la revendication 7 ou 8, **caractérisé en ce que** ledit au moins un porte-pièce (26) comprend un alignement côte à côte d'une pluralité de sections de maintien (26a) décalées les unes par rapport aux autres par rapport à la direction de transport transversale, lesdites sections de maintien pouvant être passées successivement de la position d'ouverture à la position de maintien au moyen d'actionneurs (26b), de l'arrière vers l'avant dans la direction de transport transversale.

10. Dispositif selon l'une des revendications 7 à 9,
**caractérisé en ce que** les sections de maintien (16a, 16b, 26a) sont disposées en ligne dans la direction de transport transversale (y).

11. Dispositif selon l'une des revendications 7 à 9,
**caractérisé en ce que** les sections de maintien sont décalées les unes par rapport aux autres dans la direction de transport longitudinale (x).

12. Dispositif selon l'une des revendications 9 à 11,
**caractérisé en ce que** les actionneurs (26b) comprennent des ressorts, des aimants, des actionneurs électromagnétiques, pneumatiques, hydrauliques et/ou des cames.

13. Dispositif selon l'une des revendications 7 à 12,
**caractérisé par** un dispositif de coupe (10) comprenant une lame (14) déplaçable au travers de la pièce (20, 21, 21') de l'arrière vers l'avant dans la direction de transport transversale (y), ladite lame (14) étant préférentiellement guidée le long d'une courbe fermée.

14. Dispositif selon l'une des revendications 7 à 13,
**caractérisé en ce que** des dispositifs de traitement de pièce (18, 19), en particulier des appareils de compression et/ou d'étiquetage et/ou de contrôle de qualité, sont disposés dans la zone de travail (3).

15. Dispositif selon l'une des revendications 7 à 14,
**caractérisé en ce qu'**au moins un dispositif de serrage de pièce (15) est prévu en amont de la zone de travail (3).
